# EUROPÄISCHE PATENTANMELDUNG

(11) **EP 3 460 959 A1**
(43) Veröffentlichungstag der Anmeldung: **27.03.2019**
(21) Anmeldenummer: 17192058.0
(22) Anmeldetag: 20.09.2017
(51) Int. Cl.: H02K 3/30, H01B 3/46, H01B 3/30, C08L 63/00, C08L 83/06, C08L 63/04, H01B 3/40

(54) **ELEKTRISCHES ISOLATIONSMATERIAL UND/ODER IMPRÄGNIERHARZ FÜR DIE WICKELBANDISOLIERUNG EINER MITTEL- UND/ODER HOCHSPANNUNGSMASCHINE SOWIE EIN ISOLATIONSSYSTEM DARAUS**

(71) Anmelder: Siemens Aktiengesellschaft, 80333 München (DE)
(72) Erfinder: Huber, Jürgen, 91058 Erlangen (DE); Lang, Steffen, 91352 Hallerndorf (DE); Müller, Niels, 90425 Nürnberg (DE); Nagel, Michael, 91350 Gremsdorf (DE); Übler, Matthias, 92289 Ursensollen (DE)

(57) **Zusammenfassung**

Die Erfindung betrifft ein elektrisches Isolationsmaterial und/oder Imprägnierharz für die Wickelbandisolierung sowie ein Isolationssystem, beispielsweise ein Isolationssystem für eine rotierende elektrische Maschine, insbesondere eine Mittel- oder Hochspannungsmaschine. Durch die vorliegende Erfindung wird erstmals ein Isolationsmaterial und/oder ein Imprägnierharz für eine Wickelbandisolierung vorgestellt, das durch Vorliegen von Verbindungen im gehärteten Harz, die ein -SiR₂-O-Rückgrat bilden, eine deutlich erhöhte Teilentladungsresistenz zeigt. Dadurch kann die Dicke des Isolationssystems drastisch, also beispielsweise um bis zu 20% reduziert werden.

## Beschreibung

Die Erfindung betrifft ein elektrisches Isolationsmaterial und/oder Imprägnierharz für die Wickelbandisolierung sowie ein Isolationssystem, beispielsweise ein Isolationssystem für eine rotierende elektrische Maschine, insbesondere eine Mittel- oder Hochspannungsmaschine.

Zur Erzeugung von elektrischer Energie werden typischerweise rotierende Hochspannungsmaschinen in Form von Generatoren eingesetzt. Die EP 1 981 150 A2 beschreibt einen Generator mit einem drehbaren Läufer und einem um den Läufer angeordneten Ständer. Der Ständer weist ein rotationssymmetrisch ausgestaltetes Blechpaket auf, wobei elektrisch leitende Wicklungsstäbe in Nuten am Blechpaket verlaufen. An das Blechpaket schließt sich beidseitig ein Wicklungskopf an, der die Wicklungsstäbe über Verbindungsstege zu einer geschlossenen Windung verbindet.

Im Betrieb von Hochspannungsmaschinen mit Leistungen von über 500 MVA können Bemessungsspannungen von über 10 kV erreicht werden. Die Komponenten sind entsprechend hohen mechanischen, thermischen und elektrischen Belastungen ausgesetzt. Die Zuverlässigkeit des Isolationssystems der elektrischen Leiter ist daher maßgeblich für die Betriebssicherheit verantwortlich.

Ein Isolationssystem hat die Aufgabe elektrische Leiter, wie Drähte, Spulen und Wicklungsstäbe, dauerhaft gegeneinander und gegen das Blechpaket des Ständers oder die Umgebung zu isolieren. Dazu weist das Isolationssystem eine Isolierung zwischen Teilleitern (Teilleiterisolierung), zwischen den Leitern oder Wicklungsstäben (Leiter- oder Wicklungsisolierung) und zwischen den Leitern und dem Massenpotential im Nut- und Wicklungskopfbereich (Hauptisolierung) auf.

Das grundlegende Problem bei derart elektrisch belasteten Isolationen liegt in der teilentladungsinduzierten Erosion mit sich ausbildenden "Teering"-Kanälen, die letztlich zum elektrischen Durchschlag der Isolation führen. Üblicherweise kommen zur dauerhaften Isolation der spannungsführenden Leiter in rotierenden Maschinen glimmerbasierte Isolierungen zum Einsatz.

Zum Ausbilden der Hauptisolation werden die aus isolierten Teilleitern hergestellten Formspulen mit Glimmerbändern umwickelt und im Rahmen einer Vakuum-Druck-Imprägnierung (Vacuum-Pressure-Impregnation, VPI-Prozess) mit einem Harz imprägniert. Dabei werden Glimmerbänder in Form von Glimmerpapier eingesetzt.

Durch die Imprägnierung werden die im Glimmerpapier zwischen den einzelnen Partikeln und/oder Bandfalten befindliche Hohlräume mit dem Isolationsmaterial gefüllt. Der Verbund aus Imprägnierharz und Glimmerpapier wird gehärtet, bildet den Isolationsstoff, der dann im Isolationssystem verarbeitet wird und die mechanische Festigkeit des Isolationssystems liefert. Die elektrische Festigkeit ergibt sich aus der Vielzahl der Feststoff-Feststoff-Grenzflächen des Glimmers inn. Durch den VPI-Prozess müssen daher auch kleinste Hohlräume in der Isolierung mit Harz ausgefüllt werden, um die Anzahl innerer Gas-Feststoff-Grenzflächen zu minimieren.

Insgesamt stellt dies allerhöchste elektrische, thermische und mechanische Anforderungen an die Isolation der Leiter einer Wicklung untereinander, der Wicklung gegen das Blechpaket sowie auch der am Austritt der Leiter aus dem Blechpaket gebildeten Gleitanordnung. In der Maschinenisolierung unterscheidet man die Innenpotentialsteuerung IPS zwischen dem Kupferleiterverband und der Hochspannungsisolierung, den Außenglimmschutz (AGS), zwischen der Wicklung und dem Blechpaket, sowie den Endenglimmschutz (EGS) am Austritt der Wicklungsstäbe aus dem Blechpaket.

Ein herkömmliches Isolationssystem, eine imprägnierte Wicklung aus Glimmerband mit Bandkleber und Bandbeschleuniger, ein Basisharz, beispielsweise ein Epoxidharz und einen oder mehrere Härter, gegebenenfalls auch Epoxi-funktionalisierten Härter, umfassend, ist im Bereich 0,5 bis 6 mm dick. Während des Betriebs der elektrisch rotierenden Maschine kommt es im Laufe der Zeit zu elektrischen Entladungen, die wiederum den Kunststoff in der Isolation angreifen.

Dabei wird der Kunststoff lokal zerstört und es kommt zu elektrischen Erosionserscheinungen. Diese Zerstörung des Isoliersystems wird durch den plättchenförmigen teilentladungsresistenten Glimmer im Isolationssystem durch eine Erosionswegverlängerung verzögert, so dass eine Mindestlebensdauer von 20 Jahren gewährleistet werden kann. Dennoch bildet sich ein Erosionsweg stetig im Laufe der Lebensdauer durch das Isolationssystem hindurch, bis es letztendlich zum Erdschluss in der elektrisch rotierenden Maschine kommt. Würde nun die elektrische Feldstärke von 3,5 kv/mm auf - beispielsweise 4,5 kV/mm angehoben, würde der elektrische Erosionsweg frühzeitiger ausgebildet und nach beispielsweise schon 5 Jahren bereits zum Erdschluss und damit zum Totalausfall führen.

Die Dicke des Isolationssystems ist dabei grundsätzlich so gering wie nur irgend möglich zu wählen, um hohe Wirkungsgrade der Maschinen zu erzielen. Um die Leistungsdichte im Generator und Elektromotor zu erhöhen, ist man bestrebt, die Dicke des Isolationssystems zu reduzieren, beispielsweise um ca. 20%. Das führt zwangsläufig zu steigenden elektrischen Feldstärken im Isolationssystem von - wiederum beispielsweise - 3,5kV/mm auf 4,5kV/mm und damit zu einer erhöhten elektrischen Teilentladungsaktivität.

Die herkömmlich eingesetzten Isolationssysteme erlauben dauerhafte Betriebsfeldstärken von 3,5kV/mm bei einer technisch möglichen Lebensdauer von mindestens 20 Jahren.

Bisher werden als Basisharze für elektrische Isolationen und insbesondere auch als Tränkharze für Wickelbandisolierungen bevorzugt Epoxidharze auf Kohlenstoffbasis eingesetzt, die in flüssiger Form an einem Kohlenstoff-basierten (-CR₂-)ₙ- Rückgrat alle möglichen funktionellen Gruppen, beispielsweise auch Epoxidgruppen tragen. Diese werden mit Härter zu einem duroplastischen Kunststoff umgesetzt, der einen Verguss und/oder beispielsweise die Imprägnierung der Wickelbandisolierung bildet.

Aufgabe der Erfindung ist es, einen Ansatz zur Verbesserung von Isolationssystemen für Mittel- und Hochspannungsmaschinen bereitzustellen, indem ein neues und besseres, insbesondere Teilentladungs-resistenteres Isolationsmaterial zur Verfügung gestellt wird. Dies ist insbesondere deshalb von großem Interesse, da die Reduktion des Isolationssystems um 20% etwa 600 kg - beispielsweise bei einem 370 MVA Generator - an Isolationsmaterial, wie Kunststoff, Glimmer und/oder Glasgewebe einsparen lässt.

Diese Aufgabe wird durch den Gegenstand der vorliegend beschriebenen und beanspruchten Erfindung, wie er in der Beschreibung, den Figuren und den Ansprüchen offenbart ist, gelöst.

Gegenstand der vorliegenden Erfindung ist deshalb ein Isolationsmaterial und/oder Imprägnierharz für eine Wickelbandisolierung, zumindest ein Basisharz, einen Härter sowie gegebenenfalls Additive umfassend, dadurch gekennzeichnet, dass zumindest ein Teil des für das Isolationssystem zu einem Duromer härtenden Basisharzes eine Siloxan-haltige Verbindung, die im Duromer ein -SiR₂-O-Rückgrat bildet, ist.

Außerdem ist Gegenstand der vorliegenden Erfindung ein Isolationssystem, beispielsweise ein Isolationssystem für eine rotierende elektrische Maschine, insbesondere eine Mittel- oder Hochspannungsmaschine, das unter Verwendung des erfindungsgemäßen Isolationsmaterials herstellbar ist.

Dabei steht "R" für alle Arten organischer Reste, die sich zur Härtung und/oder Vernetzung zu einem für ein Isolationssystem brauchbaren Isolationsstoff eignen. Insbesondere steht R für -Aryl, -Alkyl, -Heterocyclen, Stickstoff, Sauerstoff und/oder Schwefel substituierte Aryle und/oder Alkyle.

Insbesondere kann R gleich oder ungleich sein und für folgende Gruppen stehen:
- Alkyl, beispielsweise -Methyl, -Propyl, -isoPropyl, - Butyl, -isoButyl, -tertButyl, -Pentyl, -isoPentyl, - Cyclopentyl sowie alle weiteren Analoge bis zu Dodecyl, also das Homologe mit 12 C-Atomen;
- Aryl, beispielsweise: Benzyl-, Benzoyl-, Biphenyl-, Toluyl-, Xylole etc., insbesondere beispielsweise alle Arylreste, deren Aufbau der Definition von Hückel für die Aromatizität entspricht
- Heterozyklen: insbesondere schwefelhaltige Heterozyklen wie Thiophen, Tetrahydrothiophen, 1,4-Thioxan und Homologe und/oder Derivate davon,
- Sauerstoffhaltige Heterozyklen wie z.B. Dioxane
- Stickstoffhaltige Heterozyklen wie z.B. -CN, -CNO,-CNS, - N3 (Azid) etc.
- Schwefel substituierte Aryle und/oder Alkyle: z.B. Thiophen, aber auch Thiole.

Die Hückel-Regel für aromatische Verbindungen bezieht sich auf den Zusammenhang, dass planare, cyclisch durchkonjugierte Moleküle, die eine Anzahl von π-Elektronen, die sich in Form von 4n + 2 darstellen lässt, umfasst, eine besondere Stabilität besitzen, die auch als Aromatizität bezeichnet wird.

Nach einer vorteilhaften Ausführungsform der Erfindung umfasst das Harz neben der zur Polymerisation funktionalisierten monomer und/oder oligomer vorliegenden Komponente, die ein -SiR₂-O-Rückgrat hat, auch zumindest eine zur Polymerisation funktionalisierte monomere oder oligomere Harzkomponente mit einem Kohlenwasserstoff-also (-CR₂-)Einheiten umfassenden Rückgrat. Dazu eignen sich beispielsweise Epoxidfunktionalisierte Komponenten, wie Bisphenol-F-Diglycidylether (BFDGE) oder Bisphenol-A-Diglycidylether (BADGE), Polyurethan sowie Mischungen hieraus. Bevorzugt sind Epoxidharze basierend auf Bisphenol-F-Diglycidylether (BFDGE), Bisphenol-A-Diglycidylether (BADGE) oder Mischungen hieraus.

Beispielsweise wird die zur Polymerisation funktionalisierte monomere oder oligomere Komponente, die ein -SiR₂-O-Rückgrat hat mit einem oder mehreren Verbindungen, ausgewählt aus der Gruppe folgender Verbindungen zum Basisharz kombiniert: undestillierter und/oder destillierter, ggf. reaktivverdünnter Bisphenol-A-Diglycidylether, undestillierter und/oder destillierter, ggf. reaktivverdünnter Bisphenol-F-Diglycidylether, hydrierter Bisphenol-A-Diglycidylether und/oder hydrierter Bisphenol-F-Diglycidylether, reiner und/oder mit Lösemitteln verdünnter Epoxy-Novolak und/oder Epoxy-Phenol-Novolak, cycloaliphatische Epoxidharze wie 3,4-epoxycyclohexylmethyl-3,4-epoxycyclohexylcarboxylat z.B. CY179, ERL-4221; Celloxide 2021P, Bis(3,4-epoxycyclohexylmethyl)adipat, z.B. ERL-4299; Celloxide 2081, Vinylcyclohexendiepoxid, z.B. ERL-4206; Celloxide 2000, 2-(3,4-epoxycyclohexyl-5,5-spiro-3,4-epoxy)-cyclohexan-metadioxan z.B. ERL-4234; Hexahydrophthalsäurediglycidylester, z.B. CY184, EPalloy 5200; Tetrahydrophthalsäurediglycidylether z.B. CY192; glycidierte Aminoharze (N,N-Diglycidylpara-glycidyloxyanilin z.B. MY0500, MY0510, N,N-Diglycidylmeta-glycidyloxyanilin z.B. MY0600, MY0610, N,N,N',N'-Tetraglycidyl-4,4'-methylendianilin z.B. MY720, MY721, MY725, sowie beliebiger Mischungen der vorgenannten Verbindungen.

Als zur Polymerisation funktionalisierte monomere oder oligomere Komponente, die ein -SiR₂-O-Rückgrat hat eignen sich glycidyl-basierte und/oder epoxy-terminierte Aryl- und/oder Alkyl-Siloxane, wie beispielsweise glycidoxy funktionalisierte, insbesondere glycidoxyterminierte Siloxane. So eignet sich beispielsweise ein Siloxan wie das 1,3-Bis(3-glycidyl-oxypropyl)tetramethyldisiloxan, das DGTMS oder das glycidoxyterminierte Phenyl-Dimethylsiloxan in Monomerer und/oder in oligomerer Form, sowie in beliebigen Mischungen und/oder in Form von Derivaten. Es hat sich gezeigt, dass zumindest zweifach funktionalisierte Siloxan- Monomere, die zur Herstellung von Duroplasten einsetzbar sind, hier geeignet sind.

Als Härter eignen sich kationische und anionische Härtungskatalysatoren, wie beispielsweise organische Salze, wie organische Ammonium-, Sulphonium-, Iodonium-, Phosphonium- und/oder Imidazolium-salze und Amine, wie tertiäre Amine, Pyrazole und/oder Imidazol-Verbindungen. Beispielhaft genannt sei hier 4,5-Dihydroxymethyl-2-phenylimidazol und/oder 2-Phenyl-4-methyl-5-hydroxymethylimidazol. Es können aber auch oxirangruppenhaltige Verbindungen, wie beispielsweise Glycidylether als Härter eingesetzt werden.

Herkömmlich werden auch Säureanhydride als Härter in den Isolationsmaterialien erfolgreich eingesetzt. Deren Toxikologie ist jedoch mittlerweile nicht mehr ganz unumstritten.

Nach einer vorteilhaften Ausführungsform der Erfindung ist vorgesehen, den Kohlenstoff-basierten Härter auch ganz oder teilweise durch Siloxan-basierte Härter mit den gleichen Funktionalitäten zu ersetzen.

Nach einer vorteilhaften Ausführungsform der Erfindung umfasst das Isolationsmaterial und/oder Imprägnierharz für eine Wickelbandisolierung auch Additive wie Sinterhilfen, Reaktivbeschleuniger und/oder Füllstoffe, die sowohl als Nanopartikel als auch als Füllstoffpartikel im Mikrometerbereich vorliegen können.

Es hat sich herausgestellt, dass im Isolationsstoff, der das gehärtete Basisharz umfasst, ein Verhältnis von -SiR₂-O Rückgrat zu (-CR₂-)-Rückgrat wie 1:8 bis 1:4 am günstigsten ist, das heißt dass in dem betreffenden Isolationsmaterial die Kohlenwasserstoff-basierten Verbindungen mengenmäßig 4 bis 8 mal vorliegen wie die Siloxanbasierten Verbindungen. Die Anteile beziehen sich dabei auf die Stöchiometrie, sind also Molprozente.

Die Siloxan-haltige Komponente liegt also in einer Menge von 10 bis 50 Mol% im Basisharz des Isolationsmaterials vor. Insbesondere bevorzugt ist, wenn die Menge an Siloxan-haltiger Komponente im Basisharz nicht mehr als 20 Mol%, insbesondere nicht mehr als 18 Mol% und besonders bevorzugt nicht mehr als 15 Mol% beträgt.

Die Teilentladungsresistenz des Isolationsstoffes wird durch Vorhandensein einer gewissen Menge an SiR₂-O- bildenden Monomeren oder Oligomeren im Basisharz geradezu sprunghaft erhöht.

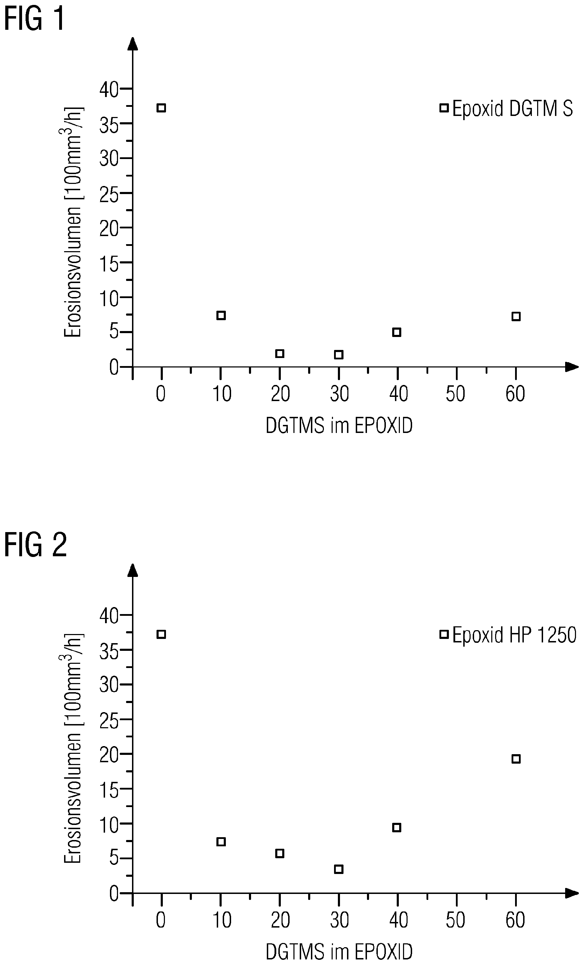

Figur 1 zeigt den Vergleich der Erosionsvolumina nach elektrischer Auslagerung bei 10 kV. Auf der x-Achse ist der Anteil an SiR₂-O- bildender Verbindung im Basisharz aufgetragen, die Nulllinie liegt dabei bei 100% (-CR₂-) Rückgrat oder Backbone bildendes Basisharz.

Zu erkennen ist, dass zwischen 0 und 10 Mol% an "ausgetauschter -CR₂- Verbindung" das Erosionsvolumen, aufgetragen auf der y-Achse, sprunghaft von ca. 37 auf 6 abfällt. Das heißt hier geht das Erosionsvolumen praktisch um einen Faktor 9 zurück. Bei 20mol% an SiR₂-O- bildender Verbindung mit 80mol% - CR₂- Verbindung im Basisharz ergibt sich ein Minimum, das bis ca. 30mol% an SiR₂-O- bildender Verbindung bestehen bleibt.

Im vorliegenden Fall wurde zum Austausch der herkömmlichen Harzkomponente durch ein -SiR₂-O-haltiges Monomer das 1,3-Bis(3-glycidyloxypropyl)tetramethyldisiloxan eingesetzt.

Zur Vermessung wurde der gehärtete Isolationsstoff gezielt und definiert elektrischen Entladungen ausgesetzt. Nach einer bestimmten Zeit wurden die erodierten Volumina durch einen Laser abgetastet und so das erodierte Volumen - oder die Erosionstiefe - ausgewertet. Die Auslagerungsparameter waren wie folgt:
Temperatur: Raumtemperatur; Atmosphäre Luft 50% RH; Dauer 100h; Spannung 10kV.

Es hat sich gezeigt, dass bereits bei einer geringen Substitution des herkömmlichen Epoxidharzes, wie des Bisphenol-A-Diglycidylether (BADGE) durch ein SiR₂-O- haltiges Monomer nach erfolgter Härtung eine deutliche Erhöhung der Teilentladungsresistenz erzielt werden kann, was in einem deutlich reduzierten erodierten Volumen resultiert.

Das gleiche Phänomen konnte bei der Substitution des Bisphenol-A-Diglycidylether (BADGE) durch ein SiR₂-O-haltige Produkt "Silres®" und/oder Silikoftal mit einem mindestens zweifach funktionalisiertem, glycidoxyterminiertem Phenyl-Dimethylsiloxan-Monomer beobachtet werden, wie in Figur 2 gezeigt.

In beiden Figuren ist ein Optimum des reduzierten Erosionsvolumens bei einer Substitution der -CR₂- Rückgrat bildenden Verbindung von 20 Mol% bis 30 Mol% durch die -SiR₂-O-enthaltende Rückgrat bildende Verbindung zu erkennen.

Die Substitution der -CR₂- Rückgrat bildenden Verbindung bewirkt jedoch im ausgehärteten Isolationsstoff eine Verschlechterung der mechanischen Eigenschaften, so dass so wenig wie möglich und so viel wie nötig an Substitution erfolgen sollte.

Nach einer bevorzugten Ausführungsform der Erfindung werden daher bis zu 10 Mol%, bevorzugt bis zu 15 Mol% und insbesondere bevorzugt bis zu 20 Mol% der Verbindung(en) im Basisharz, die ein -CR₂-Rückgrat bilden, durch entsprechend funktionalisierte Verbindungen, die ein -SiR₂-O-Rückgrat ausbilden, substituiert.

In diesem Bereich sind die mechanischen Eigenschaften des gehärteten Isolationsstoffs durchaus vergleichbar gut wie die des Isolationsstoffes ohne Verbindungen, die ein -SiR₂-O-Rückgrat ausbilden. Insbesondere sind die resultierenden Glasübergangstemperaturen und die Speichermodule des substituierten Isolationsstoffes fast identisch mit denen des herkömmlichen Isolationsstoffes ohne Substitutionen.

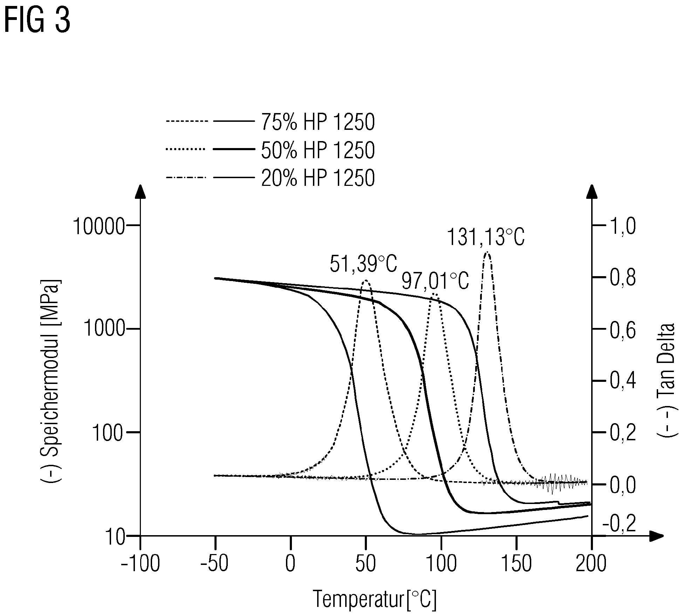

In Figur 3 sind die Speichermodule und daraus abgeleitete Glasübergangstemperaturen als Funktion des Substitutionsgrades Epoxidharzanteils durch eine, ein -SiR₂-O-Rückgrat ausbildende, Verbindung wie das "Silres®", dargestellt.

Zu erkennen ist, dass die höchste Glasübergangstemperatur bei der 25 %-igen Substitution zu messen ist.

Durch die vorliegende Erfindung wird erstmals ein Isolationsmaterial und/oder ein Imprägnierharz für eine Wickelbandisolierung vorgestellt, das durch Vorliegen von Verbindungen im gehärteten Harz, die ein -SiR₂-O-Rückgrat bilden, eine deutlich erhöhte Teilentladungsresistenz zeigt. Dadurch kann die Dicke des Isolationssystems drastisch, also beispielsweise um bis zu 20% reduziert werden.

Es ergeben sich dadurch verschiedene vorteilhafte Optionen zur Produktentwicklung. Zum einen ist es möglich, bei gleichbleibend dicken Leitern den Umfang, das Gewicht und die Kosten der isolierten Leiter zu drosseln. Zum zweiten kann der eingesparte Raum durch erhöhte Leiterdicke ausgefüllt werden und damit die Leistung pro Masse der elektrischen Maschine gesteigert werden.

Im Moment sind herkömmliche Isolationssysteme für Hochspannungsmaschinen darauf ausgelegt, dass sie dauerhafte Betriebsfeldstärken von 3,5 kV/mm für mindestens 20 Jahre aushalten. Mit den hier vorgestellten Isolationsmaterialien könnten diese Betriebsfeldstärken signifikant gesteigert werden auf bis zu 4,5kV/mm für ähnliche lange Lebensdauern.

## Patentansprüche

1. Isolationsmaterial und/oder Imprägnierharz für eine Wickelbandisolierung, zumindest ein Basisharz, einen Härter sowie gegebenenfalls Additive umfassend, **dadurch gekennzeichnet, dass** zumindest ein Teil des für das Isolationssystem zu einem Duromer härtenden Basisharzes eine Siloxan-haltige Verbindung, die im Duromer ein -SiR₂-O-Rückgrat bildet, ist.

2. Isolationsmaterial und/oder Imprägnierharz nach Anspruch 1, wobei die Verbindungen des Basisharzes monomer vorliegen.

3. Isolationsmaterial und/oder Imprägnierharz nach Anspruch 1, wobei die Verbindungen im Basisharz oligomer vorliegen.

4. Isolationsmaterial und/oder Imprägnierharz nach einem der vorstehenden Ansprüche, wobei das Basisharz zumindest zu 10 Mol%, insbesondere zumindest zu 15 Mol% eine Verbindung umfasst, die ein -SiR₂-O-Rückgrat bildet.

5. Isolationsmaterial und/oder Imprägnierharz nach einem der vorstehenden Ansprüche, wobei der Härter eine Siloxan-haltige Komponente, die ein -SiR₂-O-Rückgrat bildet, das die entsprechenden, zur Härtung des Basisharzes geeigneten Funktionalitäten trägt, umfasst.

6. Isolationsmaterial und/oder Imprägnierharz nach einem der vorstehenden Ansprüche, wobei im Basisharz Verbindungen, die ein -SiR₂-O-Rückgrat bilden mit Verbindungen, die ein -CR₂-Rückgrat bilden, in einem stöchiometrischem Verhältnis von 1:4 bis 1:8 vorliegen.

7. Isolationsmaterial und/oder Imprägnierharz nach einem der vorstehenden Ansprüche, wobei im Basisharz Verbindungen, die ein -CR₂-Rückgrat bilden, prozentual in größerem Mol% vorliegen als Verbindungen, die ein -SiR₂-O-Rückgrat ausbilden.

8. Isolationsmaterial und/oder Imprägnierharz nach einem der vorstehenden Ansprüche, wobei im Basisharz eine glycidyl- und/oder glycidoxy-funktionalisierte Verbindung, die ein - SiR₂-O-Rückgrat bildet, vorliegt.

9. Isolationsmaterial und/oder Imprägnierharz nach einem der vorstehenden Ansprüche, wobei im Basisharz eine Glycidyletherverbindung und/oder ein Novolak-Derivat vorliegen.

10. Isolationsmaterial und/oder Imprägnierharz nach einem der vorstehenden Ansprüche, wobei im Basisharz ein cycloaliphatisches Epoxidharz vorliegt.

11. Isolationsmaterial und/oder Imprägnierharz nach einem der vorstehenden Ansprüche, wobei im Basisharz ein epoxyterminiertes Aryl- und/oder Alkyl-Siloxan als Verbindung, die ein -SiR₂-O-Rückgrat bildet, vorliegt.

12. Isolationsmaterial und/oder Imprägnierharz nach einem der vorstehenden Ansprüche, wobei im Basisharz 1,3-Bis(3-glycidyloxyalkyltetramethyldisiloxan), als Verbindung, die ein -SiR₂-O-Rückgrat bildet, vorliegt.

13. Isolationsmaterial und/oder Imprägnierharz nach einem der vorstehenden Ansprüche, wobei im Basisharz 1,3-Bis(3-glycidyloxypropyl)tetra-methyl-di-siloxan als Verbindung, die ein -SiR₂-O-Rückgrat bildet, vorliegt.

14. Isolationssystem, insbesondere für eine Mittel- und/oder Hochspannungsmaschine, umfassend einen Isolationsstoff erhältlich durch Härtung eines Isolationsmaterials nach einem der Ansprüche 1 bis 13.
